(19) Europäisches Patentamt
European Patent Office
Office européen des brevets

(11) **EP 1 756 205 B1**

(12) **FASCICULE DE BREVET EUROPEEN**

(45) Date de publication et mention de la délivrance du brevet:
**08.06.2016 Bulletin 2016/23**

(51) Int Cl.:
**C08J 3/215** (2006.01)    **C09D 5/02** (2006.01)
**G02B 1/04** (2006.01)

(21) Numéro de dépôt: **05747056.9**

(22) Date de dépôt: **15.04.2005**

(86) Numéro de dépôt international:
**PCT/FR2005/050247**

(87) Numéro de publication internationale:
**WO 2005/105901 (10.11.2005 Gazette 2005/45)**

(54) **LATEX COLORE PAR DES PIGMENTS ET PROCEDE DE TRAITEMENT D'UN SUBSTRAT TRANSPARENT A L'AIDE DUDIT LATEX COLORE**

PIGMENTFARBENER LATEX UND VERFAHREN ZUR BEHANDLUNG EINES DURCHSICHTIGEN SUBSTRATS MIT BESAGTEM PIGMENTFARBENEN LATEX

PIGMENT-COLOURED LATEX AND METHOD FOR TREATING A CLEAR SUBSTRATE WITH SAID COLOURED LATEX

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.04.2004 FR 0404068**
**18.05.2004 FR 0450988**

(43) Date de publication de la demande:
**28.02.2007 Bulletin 2007/09**

(73) Titulaire: **ESSILOR INTERNATIONAL (Compagnie Générale d'Optique)**
**94227 Charenton (FR)**

(72) Inventeurs:
• **TARDIEU, Pascale**
**F-75011 PARIS (FR)**

• **MAISONNIER, Sylvette**
**F-85200 Auzay (FR)**
• **ROBERT, Anne**
**F-94440 VILLECRESNE (FR)**

(74) Mandataire: **Michelet, Alain et al**
**Cabinet HARLE et PHELIP**
**14-16, rue Ballu**
**75009 Paris (FR)**

(56) Documents cités:
**EP-A2- 0 615 144      DE-A1- 3 731 733**
**FR-A- 2 795 082      US-A- 5 576 088**
**US-A1- 2003 215 733**

**Description**

La présente invention concerne, de manière générale, un latex coloré, un procédé de fabrication d'un tel latex coloré, un procédé de traitement d'un substrat transparent, en particulier d'un verre organique, à l'aide dudit latex coloré, ainsi qu'une lentille ophtalmique comprenant un substrat recouvert d'une couche dudit latex coloré.

La technique de coloration la plus usuelle des verres organiques, dans le domaine ophtalmique, consiste à tremper ces verres organiques dans un bain de coloration aqueux comprenant des pigments solubilisés et/ou dispersés, ce bain étant généralement maintenu proche de l'ébullition (typiquement à une température de l'ordre de 90 à 95°C). Les pigments diffusent alors sous la surface du substrat et la densité de couleur est obtenue avec une quantité de pigments ayant pénétré superficiellement dans le substrat.

Ces opérations de coloration sont délicates puisqu'elles dépendent de l'affinité entre le pigment et le matériau constituant le substrat.

Les verres ophtalmiques étant constitués de nombreux substrats de natures différentes, il convient d'adapter en permanence le traitement pour chacun de ceux-ci, ce qui est coûteux en temps et en personnel consacré à cette tâche. Celle-ci est encore rendue plus difficile lorsqu'il s'agit d'obtenir des couleurs nécessitant la pénétration de plusieurs pigments, et de nombreuses retouches, effectuées après appréciation visuelle d'opérateurs, sont alors nécessaires.

Par ailleurs, certains substrats, comme les polycarbonates (PC), sont très difficilement colorables par cette voie. Il est alors nécessaire d'ajouter au bain de coloration des solvants, capables de dissoudre partiellement ou de gonfler le polycarbonate en surface, de façon à permettre au pigment de pénétrer sous la surface du substrat.

Cependant, ces solvants sont souvent agressifs pour la surface des substrats traités. De plus, compte tenu des directives internationales visant à la réduction des solvants organiques, l'utilisation de tels procédés n'est pas souhaitable.

Il est connu du brevet US 5 977 210 un latex coloré, et en particulier un procédé de préparation d'une encre sous forme d'un latex coloré, comprenant une étape de préparation d'un latex, l'ajout à ce latex d'un pigment sous forme d'une suspension aqueuse, en présence d'un tensioactif cationique, et l'ajout d'un tensioactif anionique pour empêcher la formation d'agrégats.

Mais rien n'est dit sur l'utilisation ophtalmique des latex colorés. Le brevet DE 37 31 733 décrit une composition de revêtement aqueuse comprenant une dispersion de résine dont les particules ont une taille allant de 100 à 500nanomètres, et un ou plusieurs pigments d'un diamètre variant de 7 à 70 nanomètres.Le brevet FR 2 795 082 décrit un latex acrylique ou polyuréthane coloré dont le diamètre moyen des particules varie de 50 à 400 nanomètres, voire 150 à 250 nm, ainsi qu'un article optique ou ophtalmique revêtu de ce latex. Un colorant est imprégné dans les particules de latex au moyen d'un fluide à l'état supercritique.

L'invention vise donc à fournir un latex coloré, un procédé de préparation de ce latex coloré, ainsi qu'un procédé de traitement d'un substrat transparent, en particulier un verre organique, à l'aide dudit latex coloré qui remédient aux inconvénients de l'art antérieur.

Dans les substrats transparents, on englobe des substrats photochromiques, colorés en présence de rayonnement UV et non colorés, ou très faiblement en l'absence de rayonnement UV.

Le procédé de traitement d'un substrat transparent doit permettre d'obtenir des verres colorés, réalisables par prescription, à la demande du client, présentant une coloration importante, en particulier pouvant atteindre un facteur relatif de transmission dans le visible (Tv) inférieur à 20%, tout en conservant d'excellentes propriétés optiques, notamment une absence de diffusion.

Facteur relatif de transmission dans le visible Tv :

Comme cela est bien connu de l'homme de l'art, ce facteur est spécifique de l'optique ophtalmique : il résume les propriétés physiologiques du filtre en un nombre unique : le rapport du flux de lumière émergeant du verre et du flux de lumière incident sur le verre tels qu'ils sont perçus par l'oeil, c'est-à-dire pondérés pour chaque longueur d'onde, par l'efficacité lumineuse relative spectrale $V_\lambda$, de l'oeil. Ce facteur se calcul selon la formule suivante :

$$T_v = \frac{\int_{380}^{780} \Phi_\lambda\, T_\lambda\, V_\lambda\, d_\lambda}{\int_{380}^{780} \Phi_\lambda\, V_\lambda\, d_\lambda}$$

avec $T_\lambda$, = facteur spectral de transmission, $\Phi_\lambda$, = flux spectral incident, $V_\lambda$ = efficacité lumineuse relative photopique spectrale de l'oeil. C'est ce coefficient $T_v$ qui est utilisé pour la description et la classification des verres solaires.

La coloration des substrats au moyen du latex coloré doit se faire sans modifier fondamentalement les procédés de dépôts usuels, en particulier les dépôts des couches ultérieures, notamment les revêtements anti-abrasion et anti-reflets, qui doivent conserver une bonne adhésion sur le substrat, sur le latex coloré ou entre eux.

Les verres colorés obtenus doivent présenter une excellente résistance à l'abrasion et une bonne résistance aux chocs.

Ils doivent également présenter une bonne tenue dans le temps. En particulier, les verres colorés ne doivent pas ou peu vieillir à la lumière.

La couche de latex coloré doit pouvoir supporter un trempage dans une solution de soude à 5%, sans se dissoudre, sans relarguer du pigment et sans voir ses propriétés optiques ou physiques altérées.

Enfin, le latex coloré ne doit pas voir ses propriétés affectées par des traitements de dépôt sous vide, en particulier des traitements anti-reflets.

L'invention a donc tout d'abord pour objet un latex coloré comprenant un mélange d'un latex initial non coloré et d'au moins une dispersion aqueuse initiale d'au moins un pigment. Selon l'invention :

- le ou les pigments sont insolubles dans l'eau, et
- une proportion X d'au moins 90% des particules du ou des pigments ont une taille de particule L inférieure ou égale à 370 nm, de préférence inférieure ou égale à 350 nm, mieux inférieure ou égale à 320 nm, encore mieux inférieure ou égale à 280nm.

De préférence, la taille moyenne des particules de pigment dans la dispersion aqueuse initiale est inférieure à 200nm, mieux inférieure à 150nm, mieux encore inférieure à 100nm.

De préférence, la proportion X de particules du ou des pigments de taille L est de 95%, mieux 97%, mieux encore 99% et idéalement 100%.

Classiquement, on entend par taille d'une particule, lorsque la particule est sphérique, le diamètre de cette particule et lorsque la particule n'est pas sphérique, la plus grande longueur de celle-ci.

On peut utiliser comme latex initial non coloré tout type de latex.

Comme cela est bien connu, les latex sont des dispersions de polymères dans une phase aqueuse, par exemple une phase hydroalcoolique.

Le latex initial non coloré peut être un latex à base de polymères (méth)acryliques, de polyuréthanes, de polyesters, de copolymères styrène/(méth)acrylate, ou de copolymères butadiène/(méth)acrylate.

Parmi les latex poly(méth)acryliques, on peut citer les latex à base de (méth)acrylate d'éthyle ou de butyle, ou de (méth)acrylate de méthoxyéthyle ou d'éthoxyéthyle. On peut également citer les latex coque-noyau (core-shell) tels que décrits, par exemple, dans la demande de brevet français FR 2 790 317.

Parmi les latex à base de copolymères styrène/(méth)acrylate, on peut citer les latex disponibles commercialement auprès de la société ZENECA RESINS sous la dénomination NEOCRYL®.

Parmi les latex à base de copolymères butadiène/(méth)acrylate, on peut citer les latex de poly(méthylméthacrylate-butadiène), de poly(éthylméthacrylate-butadiène), de poly(propylméthacrylate-butadiène), de poly(butylméthacrylate-butadiène), de poly(méthylacrylate-butadiène), de poly(éthylacrylate-butadiène), de poly(propylacrylate-butadiène), et de poly(butylacrylate-butadiène).

Les latex de polyuréthane sont également connus et disponibles dans le commerce.

On peut citer notamment les latex de polyuréthane décrits dans le brevet européen EP 0 680 492.

Des latex de polyuréthanne sont commercialisés par exemple par la société BAXENDEN sous les dénominations W-240 et W-234, ou bien par la société ZENECA RESINS sous la dénomination NEOREZ®.

Généralement, le latex initial a un extrait sec compris entre 20 et 50% en poids.

Par extrait sec du latex initial, on entend le pourcentage en poids de matières solides dans le latex initial.

Les particules du latex initial sont avantageusement constituées de particules de taille inférieure à 300 nm, de préférence inférieure ou égale à 250 nm, et mieux encore inférieure à 100 nm.

Selon un premier mode de réalisation, le latex initial est un latex de polyuréthane dont 95% en poids des particules ont une taille inférieure à 30 nm, préférentiellement inférieure à 15 nm et mieux encore inférieure à 10 nm.

Selon un second mode de réalisation, le latex initial est un latex acrylique dont plus de 70% en poids, de préférence plus de 80% en poids, des particules ont une taille inférieure ou égale à 250 nm, et mieux inférieure à 100 nm et mieux encore comprise entre 20 et 40 nm.

Le latex initial a de préférence une température de transition vitreuse Tg inférieure à 20°C, de préférence inférieure à -20°C, mieux inférieure à -30°C, et mieux encore inférieure à -40°C.

Le latex initial peut également comprendre au moins un agent tensioactif anionique ou non ionique.

Les tensioactifs anioniques utilisables peuvent être choisis parmi le dodécylsulfate de sodium, le dodécylbenzène sulfonate de sodium, le dodécylnaphtalène sulfate de sodium et les polysiloxanes.

Comme expliqué précédemment, le latex coloré selon l'invention comprend, outre un latex initial non coloré, au moins une dispersion aqueuse initiale d'au moins un pigment, le ou les pigments étant insolubles dans l'eau, de taille moyenne de particule inférieure à 200 nm.

De préférence, le ou les pigments ont une taille moyenne de particule inférieure à 150 nm, mieux inférieure à 100 nm.

Le choix de tels pigments, notamment le choix de la taille des particules permet d'obtenir une bonne dispersion des pigments dans le latex initial, ainsi qu'une bonne stabilité (absence de floculation).

De plus, ces pigments ne relarguent pas dans la soude et les alcools.

Ils présentent par ailleurs une bonne tenue au test normalisé de tenue à la lumière (XBO).

Ils présentent enfin l'avantage d'être finement dispersés et donc de pouvoir former des revêtement présentant une diffusion réduite.

Par ailleurs, le choix et l'intensité de la couleur du latex coloré peuvent être obtenus par le choix de la ou des dispersion(s) aqueuse(s) initiale(s) de pigment et par le choix de leur teneur dans le latex coloré.

Généralement, la (ou les) dispersion(s) aqueuse(s) initiale(s) comprend (ou comprennent) 10 à 50% du (ou des) pigment(s) par rapport au poids total de la dispersion aqueuse initiale (ou de chacune des dispersions aqueuses initiales).

La ou les dispersion(s) aqueuse(s) initiale(s) de pigment représentent de préférence au plus 10%, de préférence au plus 5%, en poids du poids du latex coloré.

A titre de dispersions aqueuses initiales de pigment utilisables dans le latex coloré selon l'invention, on peut citer la quinacrydone CI 122 commercialisée par la Société TOYO sous la référence LIOJET MAGENTA, la phtalocyanine CI 15 commercialisée par la Société TOYO sous la référence LIOJET CYAN, l'isoindolinone CI 110 commercialisée par la société TOYO sous la référence LIOJET YELLOW, la CI 7 inorganique commercialisée par la société TOYO sous la référence LIOJET BLACK, la phtalocyanine commercialisée par la société CLARIANT sous la référence COLANYLBLUE A2R100, le monoazonaphtol AS commecialisée par la société CLARIANT sous la référence COLANYL REDFGR130, la quinacridone commercialisée par la société CLARIANT sous la référence HOSTAFINE MAGENTA, la dispersion de pigment à base de carbone commercialisée par la société CLARIANT sous la référence HOSTAFINE BLACK T, la dispersion à base de carbone commercialisée par la société CLARIANT sous la référence HOSTAFINE BLACK TS, la phtalocyanine commercialisé par la société CLARIANT sous la référence HOSTAFINE BLUE B2G, la phtalocyanine commercialisée par la société CLARIANT sous la référence HOSTAFINE GRENNGN, l'HOSTAFINE YELLOW HR diarylide.

L'invention a encore pour objet un procédé de préparation d'un latex coloré tel que défini précédemment, ledit procédé comprenant une étape de mélange du latex initial avec la ou les dispersions aqueuses initiales de pigment.

L'invention a encore pour objet un procédé de traitement d'un substrat transparent ayant une face principale avant et une face principale arrière, ledit procédé de traitement comprenant une étape de dépôt sur au moins une face principale d'une couche d'un latex coloré tel que défini précédemment, suivie d'une étape de séchage au moins partiel de ladite couche.

Dans le cadre de la présente invention, le substrat est de préférence un verre minéral ou organique, de préférence organique.

Les substrats à base de verre organique peuvent être tout verre organique couramment utilisé pour des applications ophtalmiques, en particulier pour réaliser des lentilles ophtalmiques.

Parmi les substrats pouvant être traités par le procédé de traitement selon l'invention, on peut citer les substrats obtenus par polymérisation de (méth)acrylates d'alkyle, en particulier de (méth)acrylates d'alkyle en $C_1$-$C_4$, tels que le méthyl(méth)acrylate ou l'éthyl(méth)acrylate, de dérivés allyliques, de préférence d'allyl carbonates de polyols aliphatiques ou aromatiques, linéaires ou ramifiés, de thio(méth)acrylates, d'uréthanes, de thiouréthanes, de (méth)acrylates aromatiques polyéthoxylés, de préférence les bisphénolates diméthacrylates polyéthoxylés, d'époxydes, d'épisulfures ou de carbonates ou les substrats en polycarbonate (PC), en particulier le polycarbonate de bisphenol A, les substrats en polyuréthane ou en polythiouréthane.

En particulier, les allyl carbonates de polyols peuvent être choisis parmi l'éthylèneglycol bis (allyl carbonate), le diéthylèneglycol bis (2-méthyl carbonate), le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylèneglycol bis (2-éthyl allyl carbonate), le 1,3-butadiènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), et l'isopropylène bis phénol-A bis (allyl carbonate).

Les substrats particulièrement recommandés sont les substrats obtenus par polymérisation du diéthylèneglycol bis (allyl carbonate), vendu sous la dénomination commerciale CR 39® par la société PPG INDUSTRIE (lentille ORMA® ESSILOR).

Bien évidemment, les substrats peuvent être obtenus par polymérisation de mélanges de monomères ci-dessus.

Les substrats peuvent être semi-finis (une seule face est moulée ou surfacée et polie à la géométrie finale) ou finis (les deux faces sont moulées ou surfacées et polies à la géométrie finale).

Le séchage de la couche de latex coloré est généralement effectué à une température comprise entre 40 et 110°C, de préférence de l'ordre de 90°C, pendant une durée comprise entre 5 et 15 minutes, de préférence de l'ordre de 10 minutes, dans une étuve ou bien sous une lampe IR (infra rouge).

Dans ce cas, la durée de séchage varie généralement entre 20 secondes et une minute.

Généralement, l'épaisseur de la couche de latex coloré, après séchage, est comprise entre 0,5 et 20 $\mu$m, de préférence entre 1 et 10 $\mu$m, mieux entre 5 et 7 $\mu$m.

Le procédé de traitement selon l'invention peut comprendre une étape de dépôt d'une couche de latex non coloré sur la couche de latex coloré avant le dépôt de la couche de revêtement.

Dans ce cas, le latex non coloré peut être tout latex usuel tels que les latex décrits précédemment à titre de latex initial non coloré.

Avantageusement, le procédé de traitement selon l'invention comprend une étape de dépôt sur la couche de latex coloré (ou sur la couche de latex non coloré recouvrant le cas échant la couche de latex coloré) d'une couche d'une composition de revêtement.

Selon un mode de réalisation particulier de l'invention, la composition de revêtement comprend un agent de gonflement du latex coloré.

Sans vouloir être lié par une quelconque théorie, on peut penser que l'agent de gonflement du latex permet, suivant le cas, selon la nature du latex, une diffusion de la composition de revêtement en profondeur au sein du latex et par voie de conséquence conduit à une excellente adhésion entre la couche de latex et le revêtement.

Par composition comprenant un agent de gonflement du latex coloré, on entend une composition capable de provoquer un gonflement d'au moins 30%, de préférence d'au moins 40%, mieux d'au moins 50%, et mieux encore de l'ordre de 60%, d'une couche de latex de 1 $\mu$m d'épaisseur, déposée sur un support neutre tel qu'une plaque de verre minéral, après un temps d'immersion de 180 secondes à température ambiante (de l'ordre de 20°C) dans la composition de gonflement.

La couche de latex de 1 $\mu$m d'épaisseur a été obtenue par dépôt et séchage 10 minutes à 75°C.

Le gonflement ou taux de gonflement est calculé de la façon suivante :

1) On pèse la plaque de verre revêtue du film durci La masse de l'ensemble $m_o$ est

$$m_o = m_{verre} + m_{insolubles} + m_{solubles}$$

où

$m_{verre}$ est la masse de la plaque de verre
$M_{insolubles}$ représente la masse de matières non solubles dans le solvant de gonflement
$m_{solubles}$ représente la masse de matières du film solubles dans le solvant de gonflement

2) On immerge la plaque de verre revêtue du film durci dans le solvant de gonflement (immersion 180 s à 20°C)
3) Après retrait de la plaque du solvant de gonflement et égouttage, on effectue une pesée de la plaque.
La masse $m_1$ obtenue est :

$$m_1 = m_{verre} + m_{insolubles} + m_{solvant}$$

où $m_{solvant}$ est la masse de solvant ayant pénétré dans le film.
4) On procède à un séchage pendant 1 heure à 90°C de la plaque
5) On pèse la plaque séchée et on mesure une masse $m_2 = m_{verre} + m_{insolubles}$

Le taux de gonflement est le rapport poids solvant/poids insolubles, c'est-à-dire : $m_1 - m_2 / m_2 - m_{verre}$.

A titre d'exemple, un mélange de solvants constitué de 80% de méthanol, 10% d'éthanol et 10% de méthyléthylcétone entraîne un gonflement, déterminé comme indiqué ci-dessus, d'environ 60%, pour le latex W234.

Généralement, l'agent de gonflement est un solvant organique choisi parmi les alcools en $C_1$-$C_6$, les cétones en $C_1$-$C_6$ et leurs mélanges.

Les inventeurs ont constaté que, malgré le taux important de gonflement du latex et malgré l'absence de liaison chimique entre le(s) pigment(s) et le latex, on n'observe pas de relargage du (des) pigment(s) dans la composition de revêtement, en particulier lorsque celle-ci est appliquée au trempé.

Les conséquences sont que la coloration n'est pas affectée par le traitement ultérieur de dépôt de la composition de revêtement et que la durée de vie du bain comprenant la composition de revêtement est prolongée.

La couche de revêtement peut être une couche d'un revêtement anti-abrasion ou d'un revêtement anti-reflet, de préférence d'un revêtement anti-abrasion.

Les revêtements anti-abrasion utilisés selon l'invention peuvent être tous revêtements anti-abrasion connus dans le domaine de l'optique ophtalmique.

Parmi les revêtements anti-abrasion recommandés dans la présente invention, on peut citer les revêtements obtenus à partir de compositions à base d'hydrolysat de silane, en particulier d'hydrolysat d'époxysilane, telles que celles décrites dans la demande de brevet français n°93 026 49 et le brevet US 4 211 823. Préférentiellement, les compositions de revêtement anti-abrasion comprennent un hydrolysat d'époxysilane et un oxyde de silicium colloïdal et/ou un oxyde métallique colloïdal tel que $TiO_2$, $ZrO_2$, $Sb_2O_5$, $Al_2O_3$.

Une composition pour revêtement anti-abrasion préférée, comprend un hydrolysat d'époxysilane et de dialkyldialcoxysilane, de la silice colloïdale et une quantité catalytique d'acétylacétonate d'aluminium, le reste étant essentiellement constitué par des solvants classiquement utilisés pour la formulation de telles compositions.

Préférentiellement l'hydrolysat utilisé est un hydrolysat de $\gamma$-glycidoxypropyltriméthoxysilane (GLYMO) et de diméthyldiéthoxysilane (DMDES).

Les revêtements anti-abrasion sont généralement déposés par dépôt au trempé ou par centrifugation.

Comme indiqué précédemment, la couche de revêtement peut être également une couche d'un revêtement anti-reflet.

A titre d'exemple, le revêtement anti-reflets peut être constitué d'un film mono- ou multicouche, de matériau diélectrique tel que SiO, $SiO_2$, $Si_3N_4$, $TiO_2$, $ZrO_2$, $Al_2O_3$, $MgF_2$ ou $Ta_2O_5$, ou leurs mélanges.

Il devient ainsi possible d'empêcher l'apparition d'une réflexion à l'interface lentille-air.

Ce revêtement anti-reflet est appliqué généralement par dépôt sous vide selon l'une des techniques suivantes :

1. par évaporation, éventuellement assistée par faisceau ionique.
2. par pulvérisation par faisceau d'ion.
3. par pulvérisation cathodique.
4. par dépôt chimique en phase vapeur assistée par plasma.

Outre le dépôt sous vide, on peut aussi envisager un dépôt d'une couche minérale par voie sol/gel (par exemple à partir d'hydrolysat de tétraéthoxysilane).

Dans le cas où le film comprend une seule couche, son épaisseur optique doit être égale à $\lambda/4$ ($\lambda$ est une longueur d'onde comprise entre 450 et 650 nm).

Dans le cas d'un film multicouche comportant trois couches, on peut utiliser une combinaison correspondant à des épaisseurs optiques respectives $\lambda/4$, $\lambda/2$, $\lambda/4$ ou $\lambda/4$-$\lambda/4$-$\lambda/4$.

On peut en outre utiliser un film équivalent formé par plus de couches, à la place d'un nombre quelconque des couches faisant partie des trois couches précitées.

Lorsque la couche de revêtement est une couche d'un revêtement anti-abrasion, une couche d'un revêtement anti-reflet est avantageusement déposée sur la couche de revêtement anti-abrasion.

Lorsque la couche de revêtement est une couche d'un revêtement anti-reflet, une couche d'un revêtement anti-abrasion est avantageusement déposée sur le substrat avant le dépôt de la couche de latex coloré.

Comme expliqué précédemment, une couche de latex coloré est déposée sur au moins une face principale du substrat.

Selon un premier mode de réalisation de l'invention, une couche de latex coloré est déposée sur la seule face principale arrière du substrat.

Dans ce cas, un revêtement anti-abrasion peut être déposé sur la face principale avant du substrat.

Le revêtement anti-abrasion déposé sur la face principale avant du substrat peut lui même être recouvert d'un revêtement anti-reflet.

Ainsi, on peut obtenir un substrat donc la face principale arrière est recouverte d'une couche de latex coloré selon l'invention, ainsi que éventuellement d'une couche de latex non coloré, et/ou d'une couche anti-abrasion et/ou d'une couche anti-reflet selon des empilements tels que décrits précédemment, et dont la face principale avant est recouverte d'une couche anti-abrasion et d'une couche anti-reflet.

Selon un second mode de réalisation de l'invention, une couche de latex coloré est déposée sur la face principale avant et/ou sur la face principale arrière du substrat.

Dans ce cas, chaque couche de latex coloré peut elle-même être entourée, selon des empilements tels que décrits précédemment, d'une couche de latex non coloré, et/ou d'une couche anti-abrasion et/ou d'une couche anti-reflet.

L'invention a enfin pour objet une lentille ophtalmique comprenant un substrat transparent ayant une face principale avant et une face principale arrière, une couche d'un latex coloré tel que défini précédemment étant déposée sur la face principale avant et/ou arrière du substrat.

Le substrat formant la base de la lentille ophtalmique peut bien entendu être tout type de substrat couramment utilisé pour des applications ophtalmiques, tels que les substrats définis précédemment.

De même que précédemment, l'épaisseur de la couche de latex coloré est comprise entre 0,5 et 20 $\mu$m, de préférence entre 1 à 10 $\mu$m, mieux entre 5 et 7 $\mu$m.

La lentille ophtalmique selon l'invention peut être recouverte, sur la face principale avant et/ou arrière du substrat, d'une couche de latex non coloré, et/ou d'une couche anti-abrasion et/ou d'une couche anti-reflet, selon des empilements tels que décrits précédemment.

La présente invention est illustrée par les exemples qui suivent.

### Exemple 1 : Formulation d'un latex de polyuréthane coloré gris

On prépare un latex coloré selon l'invention par mélange d'un latex initial et de trois dispersions aqueuses initiales de pigments.

Le latex initial est le latex W234 commercialisé par la société BAXENDEN. Il s'agit d'un latex de polyuréthanne, dont l'extrait sec est de l'ordre de 30% en poids, stabilisé par voie anionique.

Les dispersions aqueuses initiales de pigments utilisées sont les suivantes :

- MAGENTA E VP : dispersion comprenant 20% en poids de pigments de quinacridone ; la taille moyenne des particules est égale à 125 nm ;
- BLUE B2G : dispersion comprenant 40% en poids de pigments de phtalocyanine; la taille moyenne des particules est égale à 112 nm;
- BLACK T : dispersion comprenant 30% en poids de pigments de carbone ; la taille moyenne des particules est égale à 81 nm.

Ces dispersions appartiennent à la gamme des HOSTAFINE commercialisée par la société CLARIANT.

On pèse dans un bécher 95,042 g du latex W234.

On ajoute dans le bécher contenant le latex W234 (par pesée directe dans le bécher) :

- 2,015 g de la dispersion MAGENTA E VP,
- 1,157 g de dispersion BLUE B2G,
- 1,786 g de dispersion BLACK T.

On agite l'ensemble sur une plaque magnétique pendant 2h.

On obtient un latex de polyuréthane coloré gris selon l'invention, de coloration de classe 3 pour une épaisseur de latex 6 $\mu$m, c'est-à-dire capable d'engendrer une coloration de classe 3 (facteur relatif de transmission dans le visible Tv inférieur à 20%) pour des verres revêtus d'un tel latex à l'épaisseur indiquée.

### Exemple 2 : Formulation d'un latex acrylique coloré gris

On prépare un latex coloré selon l'invention par mélange d'un latex initial et de trois dispersions aqueuses initiales de pigments.

Le latex initial est le latex NEOCRYL XK 98 commercialisé par la société NEORESINS. Il s'agit d'un latex à base de copolymère acrylique, dont l'extrait sec est égal à 44% en poids.

Les dispersions aqueuses initiales de pigments utilisées sont les mêmes que celles décrites dans l'exemple 1.

Le latex initial et les dispersions aqueuses initiales de pigments sont mélangés dans les mêmes proportions et selon le même mode opératoire que dans l'exemple 1.

On obtient un latex acrylique coloré gris selon l'invention, de coloration de classe 3.

### Exemple 3 : réalisation d'un verre coloré à partir d'un verre nu

L'objet du présent exemple est de déposer une couche d'un latex coloré selon l'invention sur un substrat.

Le latex coloré utilisé est celui décrit dans l'exemple 1.

Deux types de substrats sont utilisés, d'une part un substrat à base de CR39®, d'autre part un substrat à base de PC.

Le substrat est un verre surfacé semi-fini ou fini.

Le substrat est soumis à une préparation de surface qui consiste en un nettoyage par une solution aqueuse de soude à 5%.

Le latex coloré est déposé sur le substrat par revêtement centrifuge, à une vitesse de 700 tours/min pendant 40 secondes, sur la face concave.

La couche de latex est alors séchée par un traitement thermique infra-rouge et/ou à l'étuve à 90°C pendant 1 heure maximum (généralement de l'ordre de 15 minutes).

L'épaisseur après séchage de la couche déposée est de 6 $\mu$m+/- 0,5 $\mu$m.

On obtient un verre coloré de coloration de classe 3, c'est-à-dire présentant un facteur relatif de transmission dans le visible (Tv) inférieur à 20%.

Le verre coloré peut ensuite être revêtu d'une couche d'un latex non coloré et d'une couche d'un revêtement anti-abrasion.

Pour cela, la surface du verre coloré subit une préparation de surface qui consiste, de même que précédemment, en un nettoyage par une solution aqueuse de soude.

Une couche de latex non coloré de 1 $\mu$m d'épaisseur est ensuite déposée sur chaque face par dépôt au trempé. Le latex non coloré utilisé est le latex polyuréthane W234 commercialisé par la société BAXENDEN.

Le latex non coloré est alors séché.

On dépose ensuite la couche de revêtement anti-abrasion (vernis).

Le revêtement anti-abrasion est préparé selon le procédé suivant.

On fait tomber goutte à goutte 80,5 parties en poids d'acide chlorhydrique 0,1 N dans une solution contenant 224 parties en poids de GLYMO et 120 parties en poids de DMDES.

La solution hydrolysée est agitée 24 heures à température ambiante puis on ajoute 718 parties de silice colloïdale à 30% dans le méthanol, 15 parties d'acétylacétonate d'aluminium et 44 parties en poids d'éthylcellosolve.

On ajoute une petite quantité d'agent tensioactif.

L'extrait sec théorique de la composition renferme de l'ordre de 13% en matière solide provenant du DMDES hydrolysé.

La composition de revêtement anti-abrasion ainsi préparée est déposée sur chaque face au trempé.

On fait ensuite polymériser la composition de revêtement anti-abrasion à 100°C pendant 3 heures.

On peut en outre effectuer un dépôt d'un revêtement anti-reflet sous vide, par exemple un empilement 4 couches $ZrO_2$ / $SiO_2$ / $ZrO_2$ / $SiO_2$ sur l'une et/ou l'autre des faces du substrat.

On constate que la coloration n'est pas affectée par le dépôt sous vide de l'anti-reflets.

**Exemple 4 : réalisation d'un verre coloré à partir d'un verre vernis**

L'objet du présent exemple est de déposer une couche d'un latex coloré selon l'invention sur un substrat vernis.

Le latex coloré utilisé est celui décrit dans l'exemple 1.

Le substrat utilisé est un substrat thermoplastique PC (polycarbonate de bisphénol A).

Le substrat est un verre fini de stock.

Le substrat est alors revêtu sur ces deux faces par une couche d'un revêtement anti-abrasion comprenant un hydrolysat de $\gamma$-glycidoxypropyltriméthoxysilane, de tétraéthoxysilane et de silice colloïdale dans du méthanol ainsi qu'un catalyseur adapté.

Puis on fait polymériser la composition de revêtement anti-abrasion à 100°C pendant 3 heures.

Le substrat ainsi revêtu est soumis à une préparation de surface par activation chimique CORONA (décharge par effet couronne).

On dépose ensuite une couche d'un latex coloré selon l'invention. Le latex coloré est celui de l'exemple 1.

Le dépôt se fait par centrifugation, à une vitesse de 700 tours/min pendant 40 secondes, sur la face concave du substrat.

La couche de latex est alors séchée par un traitement thermique infra-rouge.

L'épaisseur après séchage de la couche déposée est de 6 $\mu$m+/- 0,5 $\mu$m.

On dépose ensuite de nouveau une couche d'un revêtement anti-abrasion (préparé comme indiqué dans l'exemple 3) sur la couche de latex coloré, le dépôt se faisant par centrifugation.

La nouvelle couche anti-abrasion est pré-séchée par traitement thermique infra-rouge. Puis on fait polymériser la composition de revêtement anti-abrasion à 100°C pendant 3 heures.

Le substrat peut ensuite être recouvert sur ses deux faces d'un revêtement anti-reflet, par exemple un empilement 4 couches $ZrO_2$ / $SiO_2$ / $ZrO_2$ / $SiO_2$.

On obtient un verre coloré de coloration de classe 3, c'est-à-dire présentant un facteur relatif de transmission dans le visible (Tv) inférieur à 20%.

**Exemple 5: Mesure de la coloration de différents latex colorés selon l'invention**

On mesure le facteur relatif de transmission dans le visible (Tv) ainsi que la coloration de certains empilements dans le système colorimétrique CIE L*a*b*.

Les latex colorés sont obtenus par ajout des dispersions aqueuses suivantes (voir tableau 1) dans le latex W234, en commençant par ajouter la dispersion utilisée en plus grande quantité.

Quatre latex colorés sont préparés (gris classe 3 (C3), marron classe 3 (C3), gris classe 0 (C0), marron classe 0 (C0)).

Tableau 1

| Couleur | Dispersion CLARIANT | LATEX COLORE | | | |
| --- | --- | --- | --- | --- | --- |
| | | Gris C3 | Marron C3 | Gris C0 | Marron C0 |
| Magenta | % Dispersion | 2.015 | 0.269 | 0.138 | 0.063 |
| | % Matière sèche | 0.887 | 0.118 | 0.061 | 0.028 |
| | % Pigments | 0.403 | 0.054 | 0.028 | 0.013 |
| Bleu (1) | % Dispersion | 1.157 | | 0.047 | |
| | % Matière sèche | 0.555 | | 0.023 | |
| | % Pigments | 0.463 | | 0.019 | |
| Noir (2) | % Dispersion | 1.786 | 2.515 | 0.091 | 0.103 |
| | % Matière sèche | 0.750 | 1.056 | 0.038 | 0.043 |
| | % Pigments | 0.536 | 0.755 | 0.027 | 0.031 |
| Jaune | % Dispersion | | 0.013 | | 0.010 |
| | % Matière sèche | | 0.006 | | 0.005 |
| | % Pigments | | 0.005 | | 0.004 |
| Somme dispersion % | | 4.958 | 2.797 | 0.276 | 0.176 |
| Somme MS % | | 2.192 | 1.181 | 0.122 | 0.076 |
| Somme Pigments % | | 1.402 | 0.813 | 0.074 | 0.047 |
| C3 : classe 3 ; C0 : classe 0 ; (1) : blue B2G ; (2) : black T <br> % dispersion : pourcentage massique de dispersion aqueuse du pigment correspondant dans le latex final W234 coloré liquide. <br> % matière sèche : pourcentage massique de matière sèche provenant de la dispersion aqueuse du pigment correspondant dans le latex final W234 coloré liquide <br> % pigments : pourcentage massique de pigment solide provenant de la dispersion aqueuse du pigment correspondant dans le latex final W234 coloré liquide. | | | | | |

A titre d'exemple, le latex coloré gris C3 est obtenu en additionnant au latex W234 :

- la dispersion de Magenta, puis
- la dispersion de Noir, et enfin
- la dispersion de Bleu, dans les proportions indiquées au tableau 1.

Les résultats sont présentés dans le tableau 2 suivant.

Tableau 2

| LATEX | Epaisseur | Tv% | L | a* | b* |
| --- | --- | --- | --- | --- | --- |
| Marron classe 3 | 6,5μm | 12 | 41,2 | 5,2 | 19,4 |
| Marron classe 0 | 6μm | 81,6 | 92,4 | 1 | 2,1 |
| Gris classe 3 | 6μm | 13,4 | 43,3 | -10,4 | -14,1 |
| Gris classe 0 | 6μm | 78,4 | 91 | 0,4 | -0,7 |

**Exemple 6 : Mesure de la tenue à la lumière de différents latex colorés selon l'invention**

On mesure la tenue à la lumière de différentes couches de latex colorés déposées sur un substrat selon l'invention.

Les mesures sont réalisées selon le test XBO.

Ce test consiste à exposer le substrat à une lampe au Xénon haute pression pour vérifier que la variation de la transmission ne dépasse pas certaines limites définies par la norme ISO 8089-3.

Le substrat est exposé à une lampe au Xénon haute pression (450W, avec un courant stabilisé de 25A +/- 0,2A) à une distance de 300 mm +/- 10 mm de la lampe et pendant 25h +/- 0,1 h. La température est de 23°C +/- 5°C.

A la fin de l'illumination, la variation du facteur relatif de transmission dans le visible Tv doit être inférieur à :

- 10% dans le cas d'un substrat de classe 0 et 1 ;
- 20% dans le cas d'un substrat de classe 2, 3 et 4.

Dans cet exemple, le substrat utilisé est un substrat PC.

Il est recouvert d'une couche de latex coloré obtenue par mélange du latex initial W234 avec l'une des dispersions aqueuses initiales de pigment :

- BLACK T, commercialisée par la société CLARIANT (définie dans l'exemple 1),
- le mélange de dispersions utilisé dans l'exemple 1, donnant une couleur grise,
- Marron, commercialisé par la société TOYO, correspondant à un mélange de colorants sous forme de dispersion aqueuse, à des concentrations respectives dans le latex :

* colorant Black (noir) :      5,425 %
* colorant Yellow (jaune) :   0,185 %
* colorant Magenta :          0,449 %

(les pourcentages indiqués sont les % en dispersion aqueuse dans le latex).

Le latex coloré par la dispersion BLACK T présente une épaisseur de 6 $\mu$m.

Le latex coloré par le mélange de dispersion donnant une couleur grise présente une épaisseur de 6,4 $\mu$m.

Le latex coloré par la dispersion Marron présente une épaisseur de 6 $\mu$m. De plus, dans ce cas, la couche de latex coloré est recouverte d'une couche d'un vernis anti-abrasion (identique à celui utilisé dans l'exemple 3) et d'un empilement anti-reflet $ZrO_2$ / $SiO_2$ / $ZrO_2$ / $SiO_2$ déposé par traitement sous vide.

Les résultats sont présentés dans le tableau 3.

Tableau 3

| Echantillons | Tv avant vieillissement | Tv après vieillissement |
|---|---|---|
| BLACK T | 42,8% | 44,1% |
| Gris | 8,4% | 8,3% |
| Marron | 13,2% | 13,3% |

On constate que la variation du facteur relatif de transmission Tv est très faible.

**Exemple 7 : Mesure de l'adhésion de différents empilements selon l'invention**

On mesure l'adhésion des empilements latex coloré - revêtement anti-abrasion obtenus dans les exemples 3 et 4, dans le cas où les empilements ne comprennent pas de revêtement anti-reflet.

Le test d'adhérence est effectué suivant la norme NF T 30-038, qui conduit à un classement de 0 à 5 degrés.

Ce test consiste à entailler le revêtement à l'aide d'un cutter, suivant un réseau quadrillé de lignes d'incision, à appliquer un ruban adhésif au revêtement ainsi quadrillé et à essayer de l'arracher à l'aide de celui-ci.

Les résultats sont considérés comme bons au degré 0, c'est-à-dire que les bords des incisions pratiquées demeurent parfaitement lisses, et aucun des carrés qu'elles délimitent ne se détache, et ceci même après que la lentille revêtue ait été plongée dans un bain d'eau bouillante pendant 30 minutes.

Les notes d'adhésion obtenues sont de 0 après 30 minutes à l'eau bouillante pour les exemples 3 ou 4 décrits ci-dessus.

**Exemple 8 : Mesure de la résistance à l'abrasion**

On mesure la résistance à l'abrasion de l'empilement obtenu dans l'exemple 3, dans le cas où il n'y a pas de revêtement anti-reflet, pour un verre en polycarbonate.

La résistance à l'abrasion est mesurée par le test à la paille de fer, qui consiste à abraser la face convexe traitée du verre avec une paille de fer dans le sens des fibres en effectuant 5 aller-retour, sur une amplitude de 4 à 5 cm tout en appliquant une force constante sur la paille de fer (5kg durant l'aller, 2,5 kg durant le retour). Les verres sont ensuite inspectés visuellement. On attribue une notation en fonction de la graduation suivante :

0 : aucune rayure observée
1 : verre très peu rayé (1 à 5 rayures)
2 : verre peu rayé (6 à 20 rayures)
3 : verre assez rayé (21 à 50 rayures)
4 : verre très rayé (nombre de rayures supérieur à 50)
5 : substrat nu.

L'empilement décrit dans l'exemple 3 obtient la note 3.

**Exemple comparatif 1 : Réalisation d'un latex coloré à partir d'un colorant soluble dans l'eau**

Préparation

On réalise un latex coloré en mélangeant dans le latex initial W234 (latex polyuréthanne commercialisé par la société BAXENDEN) 1% en poids du colorant bleu TECTILON 4R01 200% commercialisé par la société CIBA.

On dépose par centrifugation le latex coloré ainsi obtenu sur la face concave d'une lentille ORMA®, puis on laisse sécher pendant une heure dans une étuve à 90°C. On obtient une couche de latex coloré de 6 μm d'épaisseur.

Coloration

On mesure le facteur relatif de transmission dans le visible (Tv) ainsi que la coloration de l'empilement dans le système colorimétrique CIE L*a*b*. On obtient les résultats suivants :

Tv = 56,4
L = 79,8
a* = -10,9
b* = -25

Diffusion

On mesure également la diffusion de la lentille.

Trempe dans l'alcool

Pour simuler l'étape de vernissage sol gel (base alcoolique), la lentille est immergée dans de l'alcool isopropylique pendant 3 mn.

On mesure ensuite la coloration. On voit que la lentille a perdu toute coloration. Le colorant est extrait entièrement par l'alcool.

**Exemples 9 à 15 et exemples comparatifs 2 et 3 :**

On prépare des latex colorés en incorporant différentes émulsions aqueuses de pigments dans un latex W234 de Baxenden.

Les caractéristiques des pigments incorporés (en particulier taille moyenne des particules de pigment, tailles maximales des particules de pigments) figurent dans le tableau 4.

Les tailles sont mesurées au moyen d'un Zetasizer Malvern.

La mesure de Malvern : il s'agit d'une mesure de taille de particules par diffusion quasi élastique de la lumière ou par corrélation de photons. Cette mesure concerne des particules en suspension dans un liquide. Elle repose sur l'observation du mouvement brownien des particules et de la lumière diffusée dans un certain angle.

Il est ainsi possible de connaître la taille moyenne : c'est un diamètre moyen pondéré par l'intensité diffusée (il s'agit d'une solution de particules monodisperse ayant une taille de particules qui donnerait une intensité de lumière égale à l'ensemble des particules présentes). Cette méthode de mesure permet également d'accéder à la distribution des particules en fonction de la taille des particules.

On dépose sur des verres ophtalmiques Orma®, obtenus par polymérisation de diéthylène glycol bis(allyl carbonate), un revêtement de 6 microns d'épaisseur de latex coloré.

Les lentilles ophtalmiques sont ensuite examinées comme indiqué dans le test de contrôle d'aspect mentionné ci-dessous.

Les résultats du test sont reportés dans le tableau 4.

Observation de l'opalescence - contrôle d'aspect :

L'observation se fait dans une cabine de contrôle visuel des couleurs M6584 HF (dimension 75*50*98) de marque GAMAIN.

Dans la cabine l'illuminant est le d65 et l'éclairement de 1400 Lux.

A l'extérieur de la cabine l'éclairement est entre 600 et 1200 Lux.

L'observation se fait sur un fond blanc, l'échantillon est considéré comme acceptable si il apparaît transparent sans voile blanchâtre ; il est considéré comme opalescent si un voile gène la transmission.

Tableau 4

| Exemple | Dispersion aqueuse de pigment | | | Mesure Malverne Taille moyenne | Taille maxi pour 100% | Dépôt | |
|---|---|---|---|---|---|---|---|
| | Dénomination commerciale | Nature | % Pigment (3) | | | Concentration dans le latex (4) | Observation film boîte à lumière |
| 9 | Hostafine Magenta EVP2609 (Clariant) | quinacridone | 20% | 125 nm | 262 nm | 0.3% | Acceptable |
| 10 | Hostafine bleu B2G (Clariant) | phtalocyanine | 40% | 111 nm | 275 nm | 0.3% | Acceptable |
| 11 | Hostafine black T (Clariant) | carbone | 30% | 83 nm | 242 nm | 0.3% | Acceptable |
| 12 | Hostafine yellow HR (Clariant) | diarylide | 35% | 115 nm | 343 nm | 0.3% | Acceptable |
| Comparatif 2 | Hostafine Red HF3S (Clariant) | Naphtol AS | 40% | 156 nm | 377 nm | 0.3% | Opalescent |
| Comparatif 3 | Hostafine Rubine F6B (Clariant) | Naphtol AS | 40% | 177 nm | 394 nm | 0.3% | Opalescent |
| 13 | Liojet yellow (Toyo) | isoindo linone | 10-20% | 70.6 nm | 157 nm | 0.3% | Acceptable |
| 14 | Liojet Cyan (Toyo) | phtalocyanine | 10-20% | 101,7nm | 313 nm | 0.3% | Acceptable |
| 15 | Liojet Magenta (Toyo) | quinacridone | 10-20% | 79 nm | 217 nm | 0.3% | Acceptable |
| (3) : teneur en pigment solide dans la dispersion aqueuse initiale de pigment (4) : pourcentage de dispersion aqueuse initiale de pigment dans le latex W234 coloré. | | | | | | | |

On voit que les dispersions aqueuses de pigment Hostafine HF3S et Hosfatine Rubine F6B ne conviennent pas dans le cadre de l'invention.

Un exemple de distribution de tailles, mesuré par l'appareil Malverne est donné pour le pigment Bleu B2G Clariant :

| Taille nm | Population % |
|-----------|--------------|
| 67.8 | 1.7 |
| 82.8 | 5.7 |
| 101.2 | 14.3 |
| 123.6 | 23.7 |
| 151 | 33.1 |
| 184.5 | 16.4 |
| 225.4 | 4.9 |
| 275.3 | 0.3 |

**Revendications**

1. Latex coloré comprenant un mélange d'un latex initial non coloré et d'au moins une dispersion aqueuse initiale d'au moins un pigment sous forme de particules, **caractérisé en ce que**:

   - les particules du ou des pigments sont insolubles dans l'eau,
   - une proportion X d'au moins 90% des particules du ou des pigments présentent, dans la dispersion aqueuse initiale, une taille L inférieure ou égale à 370 nm,
   - les particules du latex initial sont constituées de particules de taille inférieure à 100 nm.

2. Latex coloré selon la revendication 1, **caractérisé en ce que** X=95%

3. Latex coloré selon la revendication 2, **caractérisé en ce que** X=97%

4. Latex coloré selon la revendication 3, **caractérisé en ce que** X=99%

5. Latex coloré selon la revendication 4, **caractérisé en ce que** X=100%

6. Latex coloré selon l'une quelconque des revendications 1 à 5, **caractérisé en ce que** $L \leq 350$ nm.

7. Latex coloré selon l'une quelconque des revendications précédentes, **caractérisé en ce que** $L \leq 320$ nm.

8. Latex coloré selon l'une quelconque des revendications précédentes, **caractérisé en ce que** $L \leq 280$ nm.

9. Latex coloré selon l'une quelconque des revendications précédentes, **caractérisé en ce que** la taille moyenne des particules de pigment dans la dispersion aqueuse initiale est inférieure à 200 nm.

10. Latex coloré selon la revendication 9, **caractérisé en ce que** la taille moyenne des particules de pigment dans la dispersion aqueuse initiale est inférieure à 150 nm, de préférence inférieure à 100 nm.

11. Latex coloré selon l'une quelconque des revendications précédentes **caractérisé en ce que** la ou les dispersion(s) aqueuse(s) initiale(s) comprend (comprennent) 10 à 50% du (ou des) pigment (s) par rapport au poids total de la dispersion aqueuse initiale (ou de chacune des dispersions aqueuses initiales).

12. Latex coloré selon l'une quelconque des revendications précédentes **caractérisé en ce que** la ou les dispersion (s) aqueuse (s) initiale (s) de pigment représentent au plus 10%, de préférence au plus 5%, en poids du poids du latex coloré.

**13.** Latex coloré selon l'une quelconque des revendications précédentes **caractérisé en ce que** le latex initial est un latex à base de polymères (méth)acryliques, de polyuréthanes, de polyesters, de copolymères styrène/(méth)acrylate, ou de copolymères butadiène/(méth)acrylate.

**14.** Latex coloré selon l'une quelconque des revendications précédentes **caractérisé en ce que** le latex initial est un latex à base de polymères (méth)acryliques ou de polyuréthanes.

**15.** Latex coloré selon l'une quelconque des revendications précédentes **caractérisé en ce que** l'extrait sec du latex initial est compris entre 20 et 50% en poids.

**16.** Latex coloré selon l'une quelconque des revendications précédentes **caractérisé en ce que** le latex initial est un latex de polyuréthane dont 95% en poids des particules ont une taille inférieure à 15 nm, de préférence inférieure à 10 nm.

**17.** Latex coloré selon l'une quelconque des revendications précédentes **caractérisé en ce que** le latex initial est un latex acrylique dont plus de 70% en poids, de préférence plus de 80% en poids, des particules ont une taille comprise entre 20 et 40 nm.

**18.** Latex coloré selon l'une quelconque des revendications précédentes **caractérisé en ce que** le latex initial comprend au moins un tensioactif anionique.

**19.** Latex coloré selon la revendication 18 **caractérisé en ce que** le ou les tensioactifs anioniques sont choisis parmi le dodécylsulfate de sodium, le dodécylbenzène sulfonate de sodium, et le dodécylnaphtalène sulfate de sodium.

**20.** Latex coloré selon l'une quelconque des revendications précédentes **caractérisé en ce que** le latex initial a une température de transition vitreuse Tg inférieure à 20°C, de préférence inférieure à -20°C, mieux inférieure à -30°C, et mieux encore inférieure à -40°C.

**21.** Procédé de préparation d'un latex coloré tel que défini à l'une quelconque des revendications précédentes **caractérisé en ce qu'**il comprend une étape de mélange du latex initial avec la ou les dispersions aqueuses initiales de pigment.

**22.** Procédé de traitement d'un substrat transparent ayant une face principale avant et une face principale arrière, **caractérisé en ce qu'**il comprend une étape de dépôt sur au moins une face principale d'une couche d'un latex coloré tel que défini à l'une quelconque des revendications 1 à 20, suivie d'une étape de séchage au moins partiel de ladite couche.

**23.** Procédé selon la revendication 22, **caractérisé en ce que** le substrat est un substrat de lentille ophtalmique.

**24.** Procédé selon la revendication 22 ou 23, **caractérisé en ce que** le substrat est un verre minéral ou organique, de préférence organique.

**25.** Procédé selon la revendication 24 **caractérisé en ce que** le substrat est obtenu par polymérisation de (méth)acrylates d'alkyle, de préférence de (méth)acrylates d'alkyle en $C_1$-$C_4$, mieux de méthyl(méth)acrylate ou d'éthyl(méth)acrylate, de dérivés allyliques, de préférence d'allyl carbonates de polyols aliphatiques ou aromatiques, linéaires ou ramifiés, de thio(méth)acrylates, d'uréthanes, de thiouréthanes, de (méth)acrylates aromatiques polyéthoxylés, de préférence les bisphénolates diméthacrylates polyéthoxylés, d'époxydes, d'épisulfures ou de carbonates.

**26.** Procédé selon la revendication 25 **caractérisé en ce que** les allyl carbonates de polyols sont choisis parmi l'éthylèneglycol bis (allyl carbonate), le diéthylèneglycol bis (2-méthyl carbonate), le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylèneglycol bis (2-éthyl allyl carbonate), le 1,3-butadiènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), et l'isopropylène bis phénol-A bis (allyl carbonate).

**27.** Procédé selon l'une quelconque des revendications 22 à 26 **caractérisé en ce que** l'épaisseur de la couche de latex coloré, après séchage, est comprise entre 0,5 et 20 $\mu$m, de préférence entre 1 à 10 $\mu$m, mieux de 5 à 7 $\mu$m.

**28.** Procédé selon l'une quelconque des revendications 22 à 27 **caractérisé en ce que** une couche de latex non coloré est déposée sur la couche de latex coloré avant le dépôt de la couche de revêtement.

**29.** Procédé selon l'une quelconque des revendications 22 à 28 **caractérisé en ce qu'**il comprend une étape de dépôt sur la couche de latex coloré d'une couche d'une composition de revêtement comprenant un agent de gonflement du latex coloré.

**30.** Procédé selon la revendication 29 **caractérisé en ce que** l'agent de gonflement est un solvant organique choisi parmi les alcools en $C_1$-$C_6$, les cétones en $C_1$-$C_6$ et leurs mélanges.

**31.** Procédé selon l'une quelconque des revendications 22 à 30 **caractérisé en ce que** la couche de revêtement est une couche d'un revêtement anti-abrasion.

**32.** Procédé selon la revendication 31 **caractérisé en ce que** une couche d'un revêtement anti-reflet est déposée sur la couche de revêtement anti-abrasion.

**33.** Procédé selon l'une quelconque des revendications 22 à 30 **caractérisé en ce que** la couche de revêtement est une couche d'un revêtement anti-reflet.

**34.** Procédé selon la revendication 33 **caractérisé en ce que** une couche d'un revêtement anti-abrasion est déposée sur le substrat avant dépôt de la couche de latex coloré.

**35.** Procédé selon l'une quelconque des revendications 22 à 34 **caractérisé en ce que** une couche de latex coloré est déposée sur la seule face principale arrière du substrat.

**36.** Procédé selon la revendication 35 **caractérisé en ce qu'**une couche anti-abrasion est déposée sur la face principale avant du substrat.

**37.** Procédé selon la revendication 36 **caractérisé en ce qu'**une couche d'un revêtement anti-reflet est déposée sur la couche d'un revêtement anti-abrasion.

**38.** Procédé selon l'une quelconque des revendications 22 à 34 **caractérisé en ce que** une couche de latex coloré est déposée sur la face principale avant et sur la face principale arrière du substrat.

**39.** Lentille ophtalmique comprenant un substrat transparent ayant une face principale avant et une face principale arrière, **caractérisé en ce que** une couche d'un latex coloré tel que défini à l'une quelconque des revendications 1 à 20 est déposée sur la face principale avant et/ou arrière du substrat.

**40.** Lentille ophtalmique selon la revendication 39 **caractérisé en ce que** le substrat est un verre minéral ou organique, de préférence organique.

**41.** Lentille ophtalmique selon la revendication 40 **caractérisé en ce que** le substrat est obtenu par polymérisation de (méth)acrylates d'alkyle, de préférence de (méth)acrylates d'alkyle en $C_1$-$C_4$, mieux de méthyl(méth)acrylate ou d'éthyl(méth)acrylate, de dérivés allyliques, de préférence d'allyl carbonates de polyols aliphatiques ou aromatiques, linéaires ou ramifiés, de thio(méth)acrylates, d'uréthanes, de thiouréthanes, de (méth)acrylates aromatiques polyéthoxylés, de préférence les bisphénolates diméthacrylates polyéthoxylés, d'époxydes, d'épisulfures ou de carbonates.

**42.** Lentille ophtalmique selon la revendication 41 **caractérisé en ce que** les allyl carbonates de polyols sont choisis parmi l'éthylèneglycol bis (allyl carbonate), le diéthylèneglycol bis (2-méthyl carbonate), le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylèneglycol bis (2-éthyl allyl carbonate), le 1,3-butadiènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate).

**43.** Lentille ophtalmique selon l'une quelconque des revendications 39 à 42 **caractérisé en ce que** l'épaisseur de la couche de latex coloré est comprise entre 0,5 et 20 $\mu$m, de préférence entre 1 à 10 $\mu$m, mieux de 5 à 7 $\mu$m.

**Patentansprüche**

1. Gefärbter Latex, umfassend eine Mischung aus einem nicht gefärbten Ausgangslatex und mindestens einer wässrigen Ausgangsdispersion von mindestens einem Pigment in Form von Teilchen, **dadurch gekennzeichnet, dass**:

   - die Teilchen des Pigments bzw. der Pigmente wasserunlöslich sind,
   - ein Anteil X von mindestens 90% der Teilchen des Pigments bzw. der Pigmente in der wässrigen Ausgangsdispersion eine Größe L kleiner gleich 370 nm aufweist,
   - die Teilchen des Ausgangslatex aus Teilchen mit einer Größe von weniger als 100 nm bestehen.

2. Gefärbter Latex nach Anspruch 1, **dadurch gekennzeichnet, dass** X = 95%.

3. Gefärbter Latex nach Anspruch 2, **dadurch gekennzeichnet, dass** X = 97%.

4. Gefärbter Latex nach Anspruch 3, **dadurch gekennzeichnet, dass** X = 99%.

5. Gefärbter Latex nach Anspruch 4, **dadurch gekennzeichnet, dass** X = 100%.

6. Gefärbter Latex nach einem der Ansprüche 1 bis 5, **dadurch gekennzeichnet, dass** $L \leq 350$ nm.

7. Gefärbter Latex nach einem der vorhergehenden Ansprüche, **dadurch gekennzeichnet, dass** $L \leq 320$ nm.

8. Gefärbter Latex nach einem der vorhergehenden Ansprüche, **dadurch gekennzeichnet, dass** $L \leq 280$ nm.

9. Gefärbter Latex nach einem der vorhergehenden Ansprüche, **dadurch gekennzeichnet, dass** die mittlere Größe der Pigmentteilchen in der wässrigen Ausgangsdispersion weniger als 200 nm beträgt.

10. Gefärbter Latex nach Anspruch 9, **dadurch gekennzeichnet, dass** die mittlere Größe der Pigmentteilchen in der wässrigen Ausgangsdispersion weniger als 150 nm und vorzugsweise weniger als 100 nm beträgt.

11. Gefärbter Latex nach einem der vorhergehenden Ansprüche, **dadurch gekennzeichnet, dass** die wässrige Ausgangsdispersion bzw. die wässrigen Ausgangsdispersionen 10 bis 50% des Pigments bzw. der Pigmente, bezogen auf das Gesamtgewicht der wässrigen Ausgangsdispersion bzw. jeder der wässrigen Ausgangsdispersionen, umfasst bzw. umfassen.

12. Gefärbter Latex nach einem der vorhergehenden Ansprüche, **dadurch gekennzeichnet, dass** die wässrige Ausgangspigmentdispersion bzw. die wässrigen Ausgangspigmentdispersionen höchstens 10 Gew.-% und vorzugsweise höchstens 5 Gew.-% des Gewichts des gefärbten Latex ausmacht bzw. ausmachen.

13. Gefärbter Latex nach einem der vorhergehenden Ansprüche, **dadurch gekennzeichnet, dass** es sich bei dem Ausgangslatex um einen Latex auf Basis von (Meth)acrylpolymeren, Polyurethanen, Polyestern, Styrol/(Meth)acrylat-Copolymeren oder Buta-dien/(Meth)acrylat-Copolymeren handelt.

14. Gefärbter Latex nach einem der vorhergehenden Ansprüche, **dadurch gekennzeichnet, dass** es sich bei dem Ausgangslatex um einen Latex auf Basis von (Meth)acrylpolymeren oder Polyurethanen handelt.

15. Gefärbter Latex nach einem der vorhergehenden Ansprüche, **dadurch gekennzeichnet, dass** der Feststoffgehalt des Ausgangslatex zwischen 20 und 50 Ges.-% beträgt.

16. Gefärbter Latex nach einem der vorhergehenden Ansprüche, **dadurch gekennzeichnet, dass** es sich bei dem Ausgangslatex um einen Polyurethanlatex handelt, in dem 95 Gew.-% der Teilchen eine Größe von weniger als 15 nm und vorzugsweise weniger als 10 nm aufweisen.

17. Gefärbter Latex nach einem der vorhergehenden Ansprüche, **dadurch gekennzeichnet, dass** es sich bei dem Ausgangslatex um einen Acryllatex handelt, in dem mehr als 70 Ges.-% und vorzugsweise mehr als 80 Gew.-% der Teilchen eine Größe zwischen 20 und 40 nm aufweisen.

18. Gefärbter Latex nach einem der vorhergehenden Ansprüche, **dadurch gekennzeichnet, dass** der Ausgangslatex mindestens ein anionisches Tensid umfasst.

**19.** Gefärbter Latex nach Anspruch 18, **dadurch gekennzeichnet, dass** das anionische Tensid bzw. die anionischen Tenside aus Natriumdodecylsulfat, Natriumdodecylbenzolsulfonat und Natriumdodecyl-naphthalinsulfat ausgewählt ist bzw. sind.

**20.** Gefärbter Latex nach einem der vorhergehenden Ansprüche, **dadurch gekennzeichnet, dass** der Ausgangslatex eine Glasübergangstemperatur Tg von weniger als 20°C, vorzugsweise weniger als -20°C, besser weniger als -30°C und noch besser weniger als -40°C aufweist.

**21.** Verfahren zur Herstellung eines gefärbten Latex gemäß einem der vorhergehenden Ansprüche, **dadurch gekennzeichnet, dass** es einen Schritt des Mischens des Ausgangslatex mit der wässrigen Ausgangspigmentdispersion bzw. den wässrigen Ausgangspigmentdispersionen umfasst.

**22.** Verfahren zur Behandlung eines transparenten Substrats mit einer vorderen Hauptfläche und einer hinteren Hauptfläche, **dadurch gekennzeichnet, dass** es einen Schritt des Aufbringens einer Schicht eines gefärbten Latex gemäß einem der Ansprüche 1 bis 20 auf mindestens eine Hauptfläche und einen darauffolgenden Schritt des mindestens teilweisen Trocknens der Schicht umfasst.

**23.** Verfahren nach Anspruch 22, **dadurch gekennzeichnet, dass** es sich bei dem Substrat um ein Substrat für eine ophthalmische Linse handelt.

**24.** Verfahren nach Anspruch 22 oder 23, **dadurch gekennzeichnet, dass** es sich bei dem Substrat um ein mineralisches oder organisches Glas und vorzugsweise um ein organisches Glas handelt.

**25.** Verfahren nach Anspruch 24, **dadurch gekennzeichnet, dass** das Substrat durch Polymerisation von Alkyl(meth)acrylaten, vorzugsweise $C_1$-$C_4$-Alkyl-(meth)acrylaten, besser Methyl(meth)acrylat oder Ethyl(meth)acrylat, Allylderivaten, vorzugsweise Allylcarbonaten von linearen oder verzweigten, aliphatischen oder aromatischen Polyolen, Thio-(meth)acrylaten, Urethanen, Thiourethanen, polyethoxylierten aromatischen (Meth)acrylaten, vorzugsweise polyethoxylierten Bisphenolatdimethacrylaten, Epoxiden, Episulfiden oder Carbonaten erhalten wird.

**26.** Verfahren nach Anspruch 25, **dadurch gekennzeichnet, dass** die Polyolallylcarbonate aus Ethylenglykolbis(allylcarbonat), Diethylenglykolbis (2-methylcarbonat), Diethylenglykolbis(allyl-carbonat), Ethylenglykolbis(2-chlorallylcarbonat), Triethylenglykolbis(allylcarbonat), 1,3-Propandiolbis(allylcarbonat), Propylenglykolbis(2-ethylallylcarbonat), 1,3-Butadiendiolbis(allyl-carbonat), 1,4-Butendiolbis(2-bromallylcarbonat), Dipropylenglykolbis(allylcarbonat), Trimethylenglykolbis(2-ethylallylcarbonat), Pentamethylenglykolbis(allylcarbonat) und Isopropylenbisphenol-A-bis(allylcarbonat) ausgewählt werden.

**27.** Verfahren nach einem der Ansprüche 22 bis 26, **dadurch gekennzeichnet, dass** die Dicke der Schicht von gefärbtem Latex nach der Trocknung zwischen 0,5 und 20 $\mu$m, vorzugsweise zwischen 1 und 10 um und besser bei 5 bis 7 $\mu$m liegt.

**28.** Verfahren nach einem der Ansprüche 22 bis 27, **dadurch gekennzeichnet, dass** vor dem Aufbringen der Überzugsschicht eine Schicht von ungefärbtem Latex auf die Schicht von gefärbtem Latex aufgebracht wird.

**29.** Verfahren nach einem der Ansprüche 22 bis 28, **dadurch gekennzeichnet, dass** es einen Schritt des Aufbringens einer Schicht aus einer Beschichtungszusammensetzung, die ein Quellmittel für den gefärbten Latex umfasst, auf die Schicht von gefärbtem Latex umfasst.

**30.** Verfahren nach Anspruch 29, **dadurch gekennzeichnet, dass** es sich bei dem Quellmittel um ein organisches Lösungsmittel handelt, das aus $C_1$-$C_6$-Alkoholen, $C_1$-$C_6$-Ketonen und Mischungen davon ausgewählt wird.

**31.** Verfahren nach einem der Ansprüche 22 bis 30, **dadurch gekennzeichnet, dass** es sich bei der Überzugsschicht um eine Antiabrieb-Überzugsschicht handelt.

**32.** Verfahren nach Anspruch 31, **dadurch gekennzeichnet, dass** auf die Antiabrieb-Überzugsschicht eine Antireflex-Überzugsschicht aufgebracht wird.

**33.** Verfahren nach einem der Ansprüche 22 bis 30, **dadurch gekennzeichnet, dass** es sich bei der Überzugsschicht um eine Antireflex-Überzugsschicht handelt.

**34.** Verfahren nach Anspruch 33, **dadurch gekennzeichnet**, das vor dem Aufbringen der Schicht von gefärbtem Latex eine Antiabrieb-Überzugsschicht auf das Substrat aufgebracht wird.

**35.** Verfahren nach einem der Ansprüche 22 bis 34, **dadurch gekennzeichnet, dass** nur auf die hintere Hauptfläche des Substrats eine Schicht von gefärbtem Latex aufgebracht wird.

**36.** Verfahren nach Anspruch 35, **dadurch gekennzeichnet, dass** auf die vordere Hauptfläche des Substrats eine Antiabriebschicht aufgebracht wird.

**37.** Verfahren nach Anspruch 36, **dadurch gekennzeichnet, dass** auf die Antiabrieb-Überzugsschicht eine Antireflex-Überzugsschicht aufgebracht wird.

**38.** Verfahren nach einem der Ansprüche 22 bis 34, **dadurch gekennzeichnet, dass** auf die vordere Hauptfläche und auf die hintere Hauptfläche des Substrats eine Schicht von gefärbtem Latex aufgebracht wird.

**39.** Ophthalmische Linse, umfassend ein transparentes Substrat mit einer vorderen Hauptfläche und einer hinteren Hauptfläche, **dadurch gekennzeichnet, dass** auf der vorderen und/oder hinteren Hauptfläche des Substrats eine Schicht eines gefärbten Latex gemäß einem der Ansprüche 1 bis 20 aufgebracht ist.

**40.** Ophthalmische Linse nach Anspruch 39, **dadurch gekennzeichnet, dass** es sich bei dem Substrat um ein mineralisches oder organisches Glas und vorzugsweise um ein organisches Glas handelt.

**41.** Ophthalmische Linse nach Anspruch 40, **dadurch gekennzeichnet, dass** das Substrat durch Polymerisation von Alkyl(meth)acrylaten, vorzugsweise $C_1$-$C_4$-Alkyl(meth)acrylaten, besser Methyl(meth)acrylat oder Ethyl(meth)acrylat, Allylderivaten, vorzugsweise Allylcarbonaten von linearen oder verzweigten, aliphatischen oder aromatischen Polyolen, Thio(meth)acrylaten, Urethanen, Thiourethanen, polyethoxylierten aromatischen (Meth)-acrylaten, vorzugsweise polyethoxylierten Bisphenolatdimethacrylaten, Epoxiden, Episulfiden oder Carbonaten erhalten wird.

**42.** Ophthalmische Linse nach Anspruch 41, **dadurch gekennzeichnet, dass** die Polyolallylcarbonate aus Ethylenglykolbis(allylcarbonat), Diethylenglykolbis (2-methylcarbonat), Diethylenglykolbis-(allylcarbonat), Ethylenglykolbis(2-chlorallylcarbonat), Triethylenglykolbis(allyl-carbonat), 1,3-Propandiolbis(allylcarbonat), Propylenglykolbis(2-ethylallylcarbonat), 1,3-Buta-diendiolbis(allylcarbonat), 1,4-Butendiolbis(2-bromallylcarbonat), Dipropylenglykolbis(allyl-carbonat), Trimethylenglykolbis(2-ethylallylcarbonat), Pentamethylenglykolbis(allylcarbonat) und Isopropylenbisphenal-A-bis(allylcarbonat) ausgewählt sind.

**43.** Ophthalmische Linse nach einem der Ansprüche 39 bis 42, **dadurch gekennzeichnet, dass** die Dicke der Schicht von gefärbtem Latex zwischen 0,5 und 20 $\mu$m, vorzugsweise zwischen 1 und 10 $\mu$m und besser bei 5 bis 7 $\mu$m liegt.

**Claims**

**1.** A colored latex comprising a mixture of an uncolored initial latex and at least one initial aqueous dispersion of at least one pigment being under the form of particles, wherein:

- the particles of the pigment(s) are water-insoluble,
- at least X% of the particles of the one or more pigment(s) have a particle size L that is 370 nm or less, in the initial aqueous dispersion, X being equal to 90,
- the initial latex particles are particles having a size of less than 100 nm.

**2.** A colored latex according to claim 1, wherein at least X=95 % of the particles have a particle size L that is 370 nm or less.

**3.** A colored latex according to claim 2, wherein at least X=97 % of the particles have a particle size L that is 370 nm or less.

**4.** A colored latex according to claim 3, wherein at least X=99 % of the particles have a particle size L that is 370 nm or less.

**5.** A colored latex according to claim 4, wherein at least X=100 % of the particles have a particle size L that is 370 nm or less.

**6.** A colored latex according to any one of claims 1 to 5, wherein $L \leq 350$ nm.

**7.** A colored latex according to any one of the preceding claims, wherein $L \leq 320$ nm.

**8.** A colored latex according to any one of the preceding claims, wherein $L \leq 280$ nm.

**9.** A colored latex according to any one of the preceding claims, wherein the pigment particle mean size in the initial aqueous dispersion is less than 200 nm.

**10.** A colored latex according to claim 9, wherein the pigment particle mean size in the initial aqueous dispersion is less than 150 nm, preferably less than 100 nm.

**11.** A colored latex according to any one of the preceding claims, wherein the one or more initial aqueous dispersion(s) comprise(s) from 10 to 50% of the pigment(s) as related to the total weight of the initial aqueous dispersion (or of each of the initial aqueous dispersions).

**12.** A colored latex according to any one of the preceding claims, wherein the one or more pigment initial aqueous dispersion(s) represent(s) at most 10%, preferably at most 5%, by weight as related to the weight of the colored latex.

**13.** A colored latex according to any one of the preceding claims, wherein the initial latex is a latex based on (meth)acrylic polymers, polyurethanes, polyesters, styrene/(meth)acrylate copolymers, or butadiene/(meth)acrylate copolymers.

**14.** A colored latex according to any one of the preceding claims, wherein the initial latex is a latex based on (meth)acrylic polymers or polyurethane.

**15.** A colored latex according to any one of the preceding claims, wherein the initial latex has a dry matter content ranging from 20 to 50% by weight.

**16.** A colored latex according to any one of the preceding claims, wherein the initial latex is a polyurethane type latex, 95% by weight of which particles have a size of less than 15 nm, preferably of less than 10 nm.

**17.** A colored latex according to any one of the preceding claims, wherein the initial latex is an acrylic type latex more than 70% by weight, preferably more than 80% by weight, of which particles have a size ranging from 20 to 40 nm.

**18.** A colored latex according to any one of the preceding claims, wherein the initial latex comprises at least one anionic surfactant.

**19.** A colored latex according to claim 18, wherein the anionic surfactant(s) is or are selected from sodium dodecylsulfate, sodium dodecylbenzene sulfonate, and sodium dodecylnaphthalene sulfate.

**20.** A colored latex according to any one of the preceding claims, wherein the initial latex has a glass transition temperature Tg of less than 20°C, preferably of less than -20°C, more preferably of less than -30°C, and even more preferably of less than -40°C.

**21.** A method for producing a colored latex such as defined according to any one of the preceding claims, wherein it comprises a step of mixing the initial latex with the one or more pigment initial aqueous dispersion(s).

**22.** A method for treating a transparent substrate having a front main face and a rear main face, wherein it comprises a deposition step of a colored latex layer such as defined according to any one of claims 1 to 21 onto at least one said main face, followed by at least partially drying said layer.

**23.** A method according to claim 22, wherein the substrate is an ophthalmic lens substrate.

24. A method according to claim 22 or 23, wherein the substrate is a mineral or an organic glass, preferably an organic glass.

25. A method according to claim 24, wherein the substrate is obtained by polymerizing alkyl (meth)acrylates, preferably $C_1$-$C_4$ alkyl (meth)acrylates, more preferably methyl (meth)acrylate or ethyl (meth)acrylate, allyl derivatives, preferably aliphatic or aromatic, linear or branched polyol allyl carbonates, thio(meth)acrylates, urethanes, thiourethanes, aromatic polyethoxylated (meth)acrylates, preferably polyethoxylated bisphenolate dimethacrylates, epoxides, episulfides or carbonates.

26. A method according to claim 25, wherein polyol allyl carbonates are selected from ethyleneglycol bis (allyl carbonate), diethyleneglycol bis (2-ethyl carbonate), diethyleneglycol bis (allyl carbonate), ethyleneglycol bis (2-chloro allyl carbonate), triethyleneglycol bis (allyl carbonate), 1,3-propanediol bis (allyl carbonate), propyleneglycol bis (2-ethyl allyl carbonate), 1,3-butadienediol bis (allyl carbonate), 1,4-butenediol bis (2-bromo allyl carbonate), dipropyleneglycol bis (allyl carbonate), trimethyleneglycol bis (2-ethyl allyl carbonate), pentamethyleneglycol bis (allyl carbonate), and isopropylene bis phenol-A bis (allyl carbonate).

27. A method according to any one of claims 22 to 26, wherein the colored latex layer has a thickness, once dried, ranging from 0.5 to 20 $\mu$m, preferably from 1 to 10 $\mu$m, more preferably from 5 to 7 $\mu$m.

28. A method according to any one of claims 22 to 27, wherein an uncolored latex layer is applied onto the colored latex layer prior to depositing the coating layer.

29. A method according to any one of claims 22 to 28, wherein it comprises a step of depositing onto the colored latex layer a coating composition layer comprising a swelling agent for the colored latex.

30. A method according to claim 29, wherein the swelling agent is an organic solvent selected from $C_1$-$C_6$ alcohols, $C_1$-$C_6$ ketones and mixtures thereof.

31. A method according to any one of claims 22 to 30, wherein the coating layer is an anti-abrasion coating layer.

32. A method according to claim 31, wherein an antireflective coating layer is applied onto the anti-abrasion coating layer.

33. A method according to any one of claims 22 to 30, wherein the coating layer is an antireflective coating layer.

34. A method according to claim 33, wherein an anti-abrasion coating layer is applied onto the substrate prior to depositing the colored latex layer.

35. A method according to any one of claims 22 to 34, wherein a colored latex layer is only applied onto the rear main face of the substrate.

36. A method according to claim 35, wherein an anti-abrasion layer is applied onto the front main face of the substrate.

37. A method according to claim 36, wherein an antireflective coating layer is applied onto the anti-abrasion coating layer.

38. A method according to any one of claims 22 to 34, wherein a colored latex layer is applied onto the front main face and onto the rear main face of the substrate.

39. An ophthalmic lens comprising a transparent substrate having a front main face and a rear main face, wherein a colored latex layer such as defined according to any one of the claims 1 to 20 is applied onto the front main face and/or the rear main face of the substrate.

40. An ophthalmic lens according to claim 39, wherein the substrate is a mineral or organic glass, preferably an organic glass.

41. An ophthalmic lens according to claim 40, wherein the substrate is obtained by polymerizing alkyl (meth)acrylates, preferably $C_1$-$C_4$ alkyl (meth)acrylates, more preferably methyl (meth)acrylate or ethyl(meth)acrylate, allyl derivatives, preferably aliphatic or aromatic, linear or branched polyol allyl carbonates, thio(meth)acrylates, urethanes, thiourethanes, aromatic polyethoxylated (meth)acrylates, preferably polyethoxylated bisphenolate dimethacrylates, epoxides, episulfides or carbonates.

42. An ophthalmic lens according to claim 41, wherein polyol allyl carbonates are selected from ethyleneglycol bis (allyl carbonate), diethyleneglycol bis (2-methyl carbonate), diethyleneglycol bis (allyl carbonate), ethyleneglycol bis (2-chloro allyl carbonate), triethyleneglycol bis (allyl carbonate), 1,3-propanediol bis (allyl carbonate), propyleneglycol bis (2-ethyl allyl carbonate), 1,3-butadienediol bis (allyl carbonate), 1,4-butenediol bis (2-bromo allyl carbonate), dipropyleneglycol bis (allyl carbonate), trimethyleneglycol bis (2-ethyl allyl carbonate), pentamethyleneglycol bis (allyl carbonate), isopropylene bis phenol-A bis (allyl carbonate).

43. An ophthalmic lens according to any one of claims 39 to 42, wherein the colored latex layer has a thickness ranging from 0.5 to 20 $\mu$m, preferably from 1 to 10 $\mu$m, more preferably from 5 to 7 $\mu$m.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5977210 A
- DE 3731733
- FR 2795082
- FR 2790317
- EP 0680492 A
- FR 9302649
- US 4211823 A